# EUROPÄISCHE PATENTSCHRIFT

(11) **EP 1 488 356 B1**
(45) Veröffentlichungstag und Bekanntmachung des Hinweises auf die Patenterteilung: **15.10.2014**
(21) Anmeldenummer: 03724830.9
(22) Anmeldetag: 11.03.2003
(51) Int. Cl.: G06F 17/40, B03C 3/68

(54) **PC-ANORDNUNG FÜR VISUALISIERUNGS-, DIAGNOSE- UND EXPERTENSYSTEME ZUR ÜBERWACHUNG UND STEUERUNG BZW. REGELUNG VON HOCHSPANNUNGSVERSORGUNGSEINHEITEN VON ELEKTROFILTERN**
PC-ARRANGEMENT FOR VISUALISATION, DIAGNOSIS AND EXPERT SYSTEMS FOR MONITORING, CONTROLLING AND REGULATING HIGH VOLTAGE SUPPLY UNITS OF ELECTRIC FILTERS
SYSTEME INFORMATIQUE POUR SYSTEMES EXPERTS DE VISUALISATION ET DE DIAGNOSTIC SERVANT A CONTROLER ET A COMMANDER OU REGULER DES UNITES D'ALIMENTATION HAUTE TENSION D'ELECTROFILTRES

(30) Priorität: 28.03.2002 DE 10214185
(43) Veröffentlichungstag der Anmeldung: 22.12.2004
(73) Patentinhaber: Siemens Aktiengesellschaft, 80333 München (DE)
(72) Erfinder: GRASS, Norbert, 91074 Herzogenaurach (DE)
(86) Internationale Anmeldenummer: PCT/DE2003/000770
(87) Internationale Veröffentlichungsnummer: WO 2003/083731

(56) Entgegenhaltungen:
- WO-A-99/60487
- US-A- 5 611 059
- US-A- 5 650 936

## Beschreibung

Die Erfindung bezieht sich auf eine PC-Anordnung für Visualisierungs-, Diagnose- und Expertensysteme zur Überwachung und Steuerung bzw. Regelung von Hochspannungsversorgungseinheiten von Elektrofiltern, mit einem Server-PC, der mittels eines ersten Netzwerkes mit den Hochspannungsversorgungseinheiten des Elektrofilters vernetzt ist, und Client-PC, die mit dem Server-PC ein zweites Netzwerk bilden. Die Aussteuerung und die Optimierung dieser Hochspannungsversorgungseinheiten ist wesentlich für die Betriebssicherheit, die Wirksamkeit und die Funktion des Elektrofilters. Zur Fernbedienung des Visualisierungssystems wird bei bekannten derartigen PC-Anordnungen spezielle Remote Access Software eingesetzt; des Weiteren ist es möglich, über OPC-Server die angestrebte Netzwerkfunktionalität zu erreichen, wobei hierbei Daten jedoch nur zyklisch aktualisiert werden können. Eine ereignisgesteuerte Datenübertragung, z.B. bei Oszilloskopfunktion, ist nicht möglich.

Aus der WO 99/60487 A1 ist eine PC-Anordnung für Visualisierungs-, Diagnose- und Expertensysteme zur Überwachung und Steuerung bzw. Regelung von Einheiten gemäß Oberbegriff des Patentanspruchs 1 bekannt. In Figur 3 dieser Druckschrift ist bereits eine PC-Anordnung mit einem Server-PC gezeigt, der mittels eines ersten Netzwerks mit den zu überwachenden und zu steuernden bzw. zu regelnden Einheiten vernetzt ist, und Client-PC, die mit dem Server-PC ein zweites Netzwerk bilden. Die Client-PC sind über den Server-PC zur Datenübertragung bzw. zum Datenaustausch mit den Einheiten an das erste Netzwerk angeschlossen. Die Softwarestruktur der bekannten PC-Anordnung basiert auf autarken bzw. autonomen Softwaremodulen, die jeweils eine oder mehrere Funktionalitäten realisieren. Ein als Serversoftwaremodul ausgestaltetes derartiges Softwaremodul ist auf dem an die Einheiten angeschlossenen Server-PC ausgeführt und dient der Datenübertragung bzw. dem Datenaustausch zwischen den Client-PC und den mittels des zweiten Netzwerks an den Server-PC angeschlossenen Einheiten. Die genannte Druckschrift betrifft im Wesentlichen die Anpassung einer Netzwerk- und Softwarestruktur an Steueranordnungen, mittels denen eine Vielzahl sehr unterschiedlich ausgestalteter Einheiten überwacht werden soll.

Die US-A 5,650,936 sowie die US-A 5,611,059 betreffen jeweils steuerungs- und regelungstechnische Vorrichtungen, die jedoch nicht speziell für die Hochspannungsversorgungseinheiten von Elektrofiltern eingesetzt werden.

Der Erfindung liegt die Aufgabe zugrunde, eine PC-Anordnung für Visualisierungs-, Diagnose- und Expertensysteme zur Überwaschung und Steuerung bzw. Regelung von Hochspannungsversorgungseinheiten von Elektrofiltern gemäß Oberbegriff des Patentanspruchs 1 derart weiterzubilden, dass zwecks Erreichung der Netzwerkfähigkeit von Visualisierungs- und Messdatenverarbeitungssystemen der Einsatz von Microsoft-Standardmechanismen möglich ist, wobei darüber hinaus die Integration von zyklischer und ereignisgesteuerter Datenverarbeitung realisiert werden soll und wobei die Netzwerkbelastung auf dem den Server-PC mit den Hochspannungsversorgungseinheiten verbindenden ersten Netzwerk so gering wie möglich gehalten werden soll.

Diese Aufgabe wird erfindungsgemäß dadurch gelöst, dass eine Softwarestruktur der PC-Anordnung in autarke Softwaremodule zerlegt ist, die jeweils zumindest eine Funktionalität realisieren und von denen eines als die Datenübertragung bzw. den Datenaustausch mit den Hochspannungsversorgungseinheiten realisierendes autarkes Serversoftwaremodul ausgebildet ist, dass das Serversoftwaremodul auf dem über das erste Netzwerk an die Hochspannungsversorgungseinheiten des Elektrofilters angeschlossenen Server-PC ausgeführt ist und dass die weiteren Softwaremodule auf jedem Client-PC oder dem Server-PC ausführbar sind.

Das den Server-PC mit den Hochspannungsversorgungseinheiten verbindende erste Netzwerk kann vorteilhaft als Profibus-Netzwerk ausgebildet sein. Alternativ ist dieses erste Netzwerk auch als Ethernet-Netzwerk mit TCP/IP ausbildbar.

Das den Server-PC mit den Client-PC verbindende zweite Netzwerk kann als Standardnetzwerk ausgebildet werden, z.B. als Ethernet-Netzwerk mit TCP/IP-Protokoll.

Um sicherzustellen, dass bei Start einer beliebigen Client-Anwendung der Server-PC bzw. das auf diesem ausgeführte Serversoftwaremodul automatisch gestartet wird, sobald an den Client-PC Daten von den Hochspannungsversorgungseinheiten benötigt werden, ist es vorteilhaft, wenn das auf dem Server-PC ausgeführte Serversoftwaremodul als COM+/DCOM-Server oder WinSocket-Server ausgebildet ist.

Zweckmäßigerweise ist jeweils einer Gruppe von Hochspannungsversorgungseinheiten ein Buskoppler zugeordnet.

Das Serversoftwaremodul ist vorteilhaft so gestaltet, dass mittels ihm eine Vielzahl von Daten von Controllern der Hochspannungsversorgungseinheiten unterschiedlich kategorisierbar ist, wobei ein Abbild von wesentlichen Mess- und Zustandsdaten der Controller im Serversoftwaremodul zyklisch aktualisierbar ist, wohingegen andere Daten, z.B. Parameterdaten, Oszilloskopdaten, Kennliniendaten und dergleichen, auf Anforderung an einem der Client-PC übertragbar sind.

Eine Verbindung zwischen dem das Serversoftwaremodul ausführenden Server-PC und den Controllern ist automatisch startbar, wenn an einem oder mehreren Client-PC Daten von den Controllern angefordert werden.

Eine Funktionalität "Messdatenarchivierung" ist zweckmäßigerweise durch ein autarkes Messdatensoftwaremodul realisiert, das vorteilhaft als Datenbank ausgebildet ist, in der Messund Zustandsdaten über einen vorgebbaren Zeitraum archivierbar sind.

Die Funktionalitäten "Visualisierung, Parametereinstellung, Gerätebedienung" ist gemäß einer vorteilhaften Ausführungsform der erfindungsgemäßen PC-Anordnung durch ein autarkes Displaysoftwaremodul realisiert, wobei zweckmäßigerweise mittels des Displaysoftwaremoduls auf im Messdatensoftwaremodul abgespeicherte Daten, im Serversoftwaremodul aktualisierte Mess- und Zustandsdaten und - über das Serversoftwaremodul - unmittelbar auf in den Controllern zur Verfügung stehende weitere Daten zugreifbar ist.

Das Displaysoftwaremodul ist vorzugsweise auf mehreren Client-PC und dem Server-PC simultan ausführbar.

Das Displaysoftwaremodul kann zweckmäßigerweise in unterschiedlichen Benutzerebenen, z.B. in einer Operator- und einer Expertenebene, realisiert sein, so dass für in unterschiedlicher Weise autorisierte Personen unterschiedliche Überwachungs- und Eingriffsmaßnahmen möglich sind.

Eine Funktionalität "Steuerung Hilfsantriebe" ist zweckmäßigerweise durch ein autarkes Steuerungssoftwaremodul realisiert, wobei mittels dieses Steuerungssoftwaremoduls Bestandteile des Elektrofilters automatisch an unterschiedliche Betriebsbedingungen des Elektrofilters adaptierbar sein können.

Eine Funktionalität "Optimierung" kann durch ein autarkes Optimierungssoftwaremodul realisiert sein, mittels dem der Betrieb des Elektrofilters unter Zugrundelegung z.B. der Wirksamkeit des Elektrofilters und/oder des Energieverbrauchs des Elektrofilters optimiert werden kann.

Vorteilhaft kann auf das im Server-PC ausgeführte Serversoftwaremodul mittels des Messdatensoftwaremoduls, des Displaysoftwaremoduls, des Optimierungssoftwaremoduls und des Steuerungssoftwaremoduls zugegriffen werden.

Die Datenübertragung bzw. der Datenaustausch über das Serversoftwaremodul ist vorteilhaft sowohl zyklisch als auch ereignisgesteuert ausgestaltet.

Im folgenden wird die Erfindung anhand einer Ausführungsform unter Bezugnahme auf die Zeichnung näher erläutert.

Es zeigen:
- FIG 1: eine Ausführungsform einer erfindungsgemäßen PC-Anordnung für Visualisierungs-, Diagnose- und Expertensysteme zur Überwachung und Steuerung bzw. Regelung von Hochspannungsversorgungseinheiten von Elektrofiltern; und
- FIG 2: eine Prinzipdarstellung von in der PC-Anordnung gemäß FIG 1 eingesetzten Softwaremodulen.

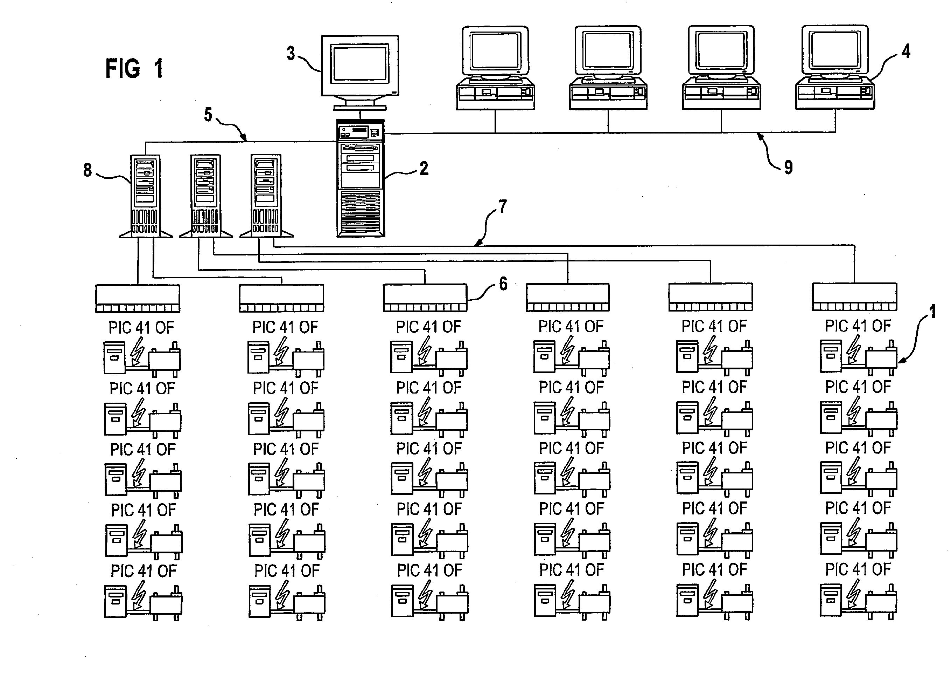

Eine in FIGUR 1 gezeigte Ausführungsform einer erfindungsgemäßen PC-Anordnung für Visualisierungs-, Diagnose- und Expertensysteme zur Überwachung und Steuerung bzw. Regelung von mit Controllern versehenen Hochspannungsversorgungseinheiten 1 von Elektrofiltern hat einen Server-PC 2 mit einem Monitor 3 sowie - im dargestellten Ausführungsbeispiel - vier Client-PC 4.

Der Server-PC 2 ist über ein als Profibus-Netzwerk ausgebildetes erstes Netzwerk 5 an die Hochspannungsversorgungseinheiten 1 angeschlossen. Hierzu ist jeweils einer Gruppe von - im dargestellten Ausführungsbeispiel - fünf Hochspannungsversorgungseinheiten 1 mit Controllern jeweils ein Buskoppler 6 zugeordnet. Die - im dargestellten Ausführungsbeispiel - sechs Buskoppler 6 stehen über einen optischen Profibus 7 mit optischen Anschlussmodulen 8 in Verbindung, die ihrerseits an den Server-PC 2 angeschlossen sind.

Der Server-PC 2 bildet mit den - im dargestellten Ausführungsbeispiel - vier Client-PC 4 ein zweites Netzwerk 9, welches - im dargestellten Ausführungsbeispiel - als Ethernet-Netzwerk mit TCP/IP-Protokoll ausgebildet sein kann. Des Weiteren sind als zweites Netzwerk 9 übliche Standardnetzwerke einsetzbar.

Mittels der vorstehend beschriebenen PC-Anordnung ist es möglich, die Gerätebedienung und die Messdatenvisualisierung der Hochspannungsversorgungseinheiten 1 am Server-PC 2 und/oder an beliebigen Client-PC 4 des zweiten Netzwerks 9 durchzuführen. Die Netzwerkbelastung des den Server-PC 2 an die Controller der Hochspannungsversorgungseinheiten 1 anschließenden Profibus-Netzwerks 5 wird hierbei so gering wie möglich gehalten.

Die in FIGUR 1 gezeigten Hochspannungsversorgungseinheiten 1 dienen zur Erzeugung der Hochspannung des Elektrofilters. Die Aussteuerung und die Optimierung dieser Hochspannungsversorgungseinheiten 1 ist wesentlich für die Wirksamkeit des Elektrofilters.

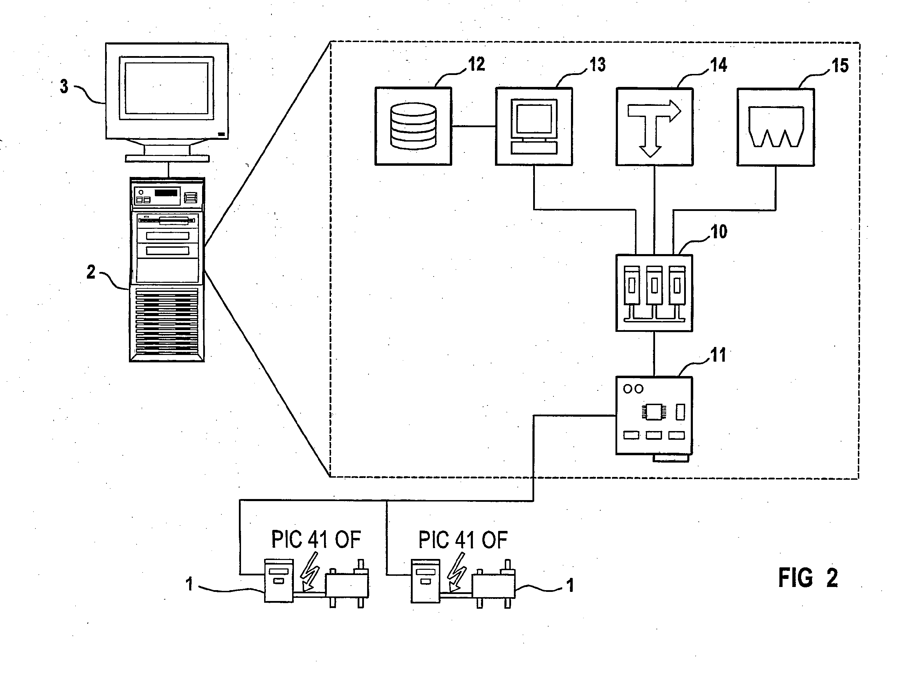

Die mittels der vorstehend geschilderten PC-Anordnung aus dem Server-PC 2 und den Client-PC 4 zu realisierenden Funktionalitäten, z.B. die Messdatenarchivierung, die Visualisierung, die Optimierung, die Regelung und die Datenübertragung sind in autarke Softwaremodule zerlegt, wie sich insbesondere aus FIGUR 2 ergibt, in der die Struktur dieser Softwaremodule dargestellt sind.

Ein die Datenübertragung bzw. den Datenaustausch mit den Hochspannungsversorgungseinheiten 1 bzw. deren Controllern realisierendes autarkes Serversoftwaremodul 10 ist auf dem über das Profibus-Netzwerk 5 an die Controller der Hochspannungsversorgungseinheiten 1 des Elektrofilters angeschlossenen Server-PC 2 ausgeführt. Dieses Serversoftwaremodul 10 kann vorteilhaft als DCOM-Server oder WinSocket-Server ausgebildet sein. Das Serversoftwaremodul 10 läuft ausschließlich auf dem Server-PC 2, was in FIGUR 2 mittels Kommunikation mit einer Profibus-Karte 11 dargestellt ist.

Die bei der in den FIGUREN dargestellten Ausführungsform vorgesehenen weiteren Softwaremodule, nämlich ein Messdatensoftwaremodul 12, ein Displaysoftwaremodul 13, ein Steuerungssoftwaremodul 14 und ein Optimierungssoftwaremodul 15, können auf beliebigen PC, d.h. auf den Server-PC und/oder jedem Client-PC 4 der PC-Anordnung ausgeführt werden.

Der Server-PC 2 bzw. das auf ihm ausgeführte Serversoftwaremodul 10 tauscht mit den Controllern 6 der Hochspannungsversorgungseinheiten 1 zyklisch und ereignisgesteuert Daten aus. Diese Daten sind mittels des Serversoftwaremoduls 10 unterschiedlich kategorisierbar, wobei ein Abbild von für den Betrieb der Hochspannungsversorgungseinheiten 1 wesentlichen Mess- und Zustandsdaten der den Hochspannungsversorgungseinheiten 1 zugeordneten Controller 6 im Serversoftwaremodul 10 zyklisch aktualisiert wird. Weitere Daten, z.B. Parameterdaten, Oszilloskopdaten, Kennliniendaten und dergleichen sind auf Anforderung an einem Client-PC 4 oder am Server-PC 2 jeweils dorthin übertragbar.

Wenn die Daten der letztgenannten Kategorie am Server-PC 2 oder an einem Client-PC 4 angefordert werden, kann die Verbindung zwischen dem das Serversoftwaremodul 10 ausführenden Server-PC 2 und den Controllern automatisch gestartet werden.

Mittels des autarken Messdatensoftwaremoduls 12 ist die Funktionalität "Messdatenarchivierung" realisiert, wobei das Messdatensoftwaremodul 12 als Datenbank oder Dateisystem ausgebildet ist, in der Mess- und Zustandsdaten über einen vorgebbaren Zeitraum archivierbar sind.

Mittels des Displaysoftwaremoduls 13 sind die Funktionalitäten "Visualisierung, Parametereinstellung, Gerätebedienung" realisiert. Entsprechend ermöglicht das Displaysoftwaremodul 13 die Visualisierung aller Daten, die Ein- bzw. Verstellung von Parametern sowie die Bedienung der Hochspannungsversorgungseinheiten 1. Die mittels des Displaysoftwaremoduls 13 visualisierbaren Daten können sowohl aus der mittels des Messdatensoftwaremoduls 12 realisierten Messdatenbank entnommen werden als auch über den Server-PC 2 bzw. das dort laufende Serversoftwaremodul 10 unmittelbar von den Hochspannungsversorgungseinheiten 1 bzw. deren Controllern übertragen werden.

Das Displaysoftwaremodul 13 kann auf mehreren PC 2, 4 der PC-Anordnung gleichzeitig ausgeführt werden. Das Displaysoftwaremodul 12 ist in unterschiedlichen Benutzerebenen, z.B. in Operator- und Expertenebenen, realisierbar.

Mittels des Steuerungssoftwaremoduls 14 wird die Funktionalität "Steuerung Hilfsantriebe" realisiert, mittels der z.B. die Plattenklopfung des Elektrofilters automatisch an unterschiedliche Betriebsbedingungen adaptierbar ist.

Das die Funktionalität "Optimierung" realisierende Optimierungssoftwaremodul 15 führt dazu, dass der Betrieb des Elektrofilters unter Berücksichtigung der Wirksamkeit desselben und/oder seines Energieverbrauchs optimiert abläuft.

Die Realisierung des Serversoftwaremoduls 10 mit COM+/DCOM hat zur Folge, dass bei Beginn einer beliebigen Anwendung auf einem Client-PC 4, z.B. der Visualisierung, der Optimierung oder der Datenarchivierung, automatisch der Server gestartet wird, sobald die Daten von den Controllern benötigt werden.

Im Falle der vorstehend anhand einer Ausführungsform geschilderten erfindungsgemäßen PC-Anordnung aus Server-PC 2 und Client-PC 4 ist es möglich, zur Erreichung der Netzwerkfähigkeit von Visualisierungs- und Messdatenverarbeitungssystemen Microsoft-Standardmechanismen für verteilte Systeme einzusetzen. Darüber hinaus wird die Integration von zyklischer und ereignisgesteuerter Datenverarbeitung erreicht.

Auf einem Bildschirm, der dem Displaysoftwaremodul 13 zugeordnet ist und von diesem aufgebaut wird, sind die Parametereinstellung, die Messwerte, ein Online-Oszilloskop, Kennlinien, eine Visualisierung des Langzeitdatenarchivs, eine Fehlerstatistik und eine Profibusüberwachung sichtbar.

## Patentansprüche

1. PC-Anordnung für Visualisierungs-, Diagnose- und Expertensysteme zur Überwachung und Steuerung bzw. Regelung von Einheiten (1), mit einem Server-PC (2), der mittels eines ersten Netzwerks (5) mit den Einheiten (1) vernetzt ist, und Client-PC (4), die mit dem Server-PC (2) ein zweites Netzwerk (9) bilden und die zur Datenübertragung bzw. zum Datenaustausch mit den Einheiten (1) über den Server-PC (2) an das erste Netzwerk (5) angeschlossen sind, wobei die Softwarestruktur der PC-Anordnung (2, 4) in autarke, jeweils zumindest eine Funktionalität realisierende Softwaremodule (10, 12, 13, 14, 15) zerlegt ist, von denen eines als die Datenübertragung bzw. den Datenaustausch mit den Einheiten (1) realisierendes autarkes Serversoftwaremodul (10) ausgebildet ist, das auf dem über das erste Netzwerk (5) an die Einheiten (1) angeschlossenen Server-PC (2) ausgeführt ist, **dadurch gekennzeichnet, dass** die Einheiten (1) Hochspannungsversorgungseinheiten (1) von Elektrofiltern sind, dass die weiteren Softwaremodule (12, 13, 14, 15) auf jedem Client-PC (4) oder dem Server-PC (2) ausführbar sind, und dass das Serversoftwaremodul (10) so ausgebildet ist, dass mittels ihm eine Vielzahl von Daten von Controllern der Hochspannungsversorgungseinheiten (1) unterschiedlich kategorisierbar sind, wobei eine Abbildung von Mess- und Zustandsdaten der Controller im Serversoftwaremodul (10) zyklisch aktualisierbar ist, wohingegen andere Daten, z.B. Parameterdaten, Oszilloskopdaten, Kennliniendaten ud.dgl., auf Anforderung von einem der Client-PC (4) übertragbar sind.

2. PC-Anordnung nach Anspruch 1, bei der das den Server-PC (2) mit den Hochspannungsversorgungseinheiten (1) verbindende erste Netzwerk (5) als Profibus-Netzwerk ausgebildet ist.

3. PC-Anordnung nach Anspruch 1, bei der das den Server-PC (2) mit den Hochspannungsversorgungseinheiten (1) verbindende erste Netzwerk (5) als Ethernet-Netzwerk mit TCP/IP ausgebildet ist.

4. PC-Anordnung nach einem der Ansprüche 1 bis 3, bei der das den Server-PC (2) mit den Client-PC (4) verbindende zweite Netzwerk (9) als Standardnetzwerk, z.B. als Ethernet-Netzwerk mit TCP/IP-Protokoll, ausgebildet ist.

5. PC-Anordnung nach einem der Ansprüche 1 bis 4, bei der das auf dem Server-PC (2) ausgeführte Serversoftwaremodul (10) als DCOM-Server oder WinSocket-Server ausgebildet ist.

6. PC-Anordnung nach einem der Ansprüche 1 bis 5, bei der jeweils einer Gruppe von Hochspannungsversorgungseinheiten (1) ein Buskoppler (6) zugeordnet ist.

7. PC-Anordnung nach Anspruch 6, bei der das Serversoftwaremodul (10) so ausgebildet ist, dass mittels ihm eine Vielzahl von Daten von Controllern der Hochspannungsversorgungseinheiten (1) unterschiedlich kategorisierbar ist, wobei eine Abbildung von Mess- und Zustandsdaten der Controller im Serversoftwaremodul (10) zyklisch aktualisierbar ist, wohingegen andere Daten, z.B. Parameterdaten, Oszilloskopdaten, Kennliniendaten und dergleichen, auf Anforderung von einem der Client-PC (4) übertragbar sind.

8. PC-Anordnung nach Anspruch 6 oder 7, bei der eine Verbindung zwischen dem das Serversoftwaremodul (10) ausführenden Server-PC (2) und den Controllern automatisch startbar ist, wenn an einem oder mehreren Client-PC (4) Daten von den Controllern angefordert werden.

9. PC-Anordnung nach einem der Ansprüche 1 bis 8, bei der eine Funktionalität "Messdatenarchivierung" durch ein autarkes Messdatensoftwaremodul (12) realisiert ist.

10. PC-Anordnung nach Anspruch 9, bei der das Messdatensoftwaremodul (12) als Datenbank oder Dateisystem ausgebildet ist, in der Mess- und Zustandsdaten über einen vorgebbaren Zeitraum archivierbar sind.

11. PC-Anordnung nach einem der Ansprüche 1 bis 10, bei der Funktionalitäten "Visualisierung, Parametereinstellung, Gerätebedienung" durch ein autarkes Displaysoftwaremodul (13) realisiert sind.

12. PC-Anordnung nach Anspruch 11, bei der mittels des Displaysoftwaremoduls (13) auf im Messdatensoftwaremodul (12) abgespeicherte Daten, im Serversoftwaremodul (10) aktualisierte Mess- und Zustandsdaten und - über das Serversoftwaremodul (10) - unmittelbar auf in den Controllern zur Verfügung stehende weitere Daten zugreifbar ist.

13. PC-Anordnung nach Anspruch 11 oder 12, bei der das Displaysoftwaremodul (13) auf mehreren Client-PC (4) und dem Server-PC (2) simultan ausführbar ist.

14. PC-Anordnung nach einem der Ansprüche 11 bis 13, bei der das Displaysoftwaremodul (13) in unterschiedlichen Benutzerebenen, z.B. in einer Operator- und einer Expertenebene, realisierbar ist.

15. PC-Anordnung nach einem der Ansprüche 1 bis 14, bei der eine Funktionalität "Steuerung Hilfsantriebe" durch ein autarkes Steuerungssoftwaremodul (14) realisiert ist.

16. PC-Anordnung nach Anspruch 15, bei der Bestandteile des Elektrofilters mittels des Steuerungssoftwaremoduls (14) automatisch an unterschiedliche Betriebsbedingungen des Elektrofilters adaptierbar sind.

17. PC-Anordnung nach einem der Ansprüche 1 bis 16, bei der eine Funktionalität "Optimierung" durch ein autarkes Optimierungssoftwaremodul (15) realisiert ist.

18. PC-Anordnung nach Anspruch 17, bei der mittels des Optimierungssoftwaremoduls (15) der Betrieb des Elektrofilters unter Zugrundelegung der Wirksamkeit des Elektrofilters und/oder des Energieverbrauchs des Elektrofilters optimierbar ist.

19. PC-Anordnung nach Anspruch 17 oder 18, bei der auf das im Server-PC (2) ausgeführte Serversoftwaremodul (10) mittels des Messdatensoftwaremoduls (12), des Displaysoftwaremoduls (13), des Optimierungssoftwaremoduls (15) und des Steuerungssoftwaremoduls (14) zugreifbar ist.

20. PC-Anordnung nach einem der Ansprüche 1 bis 19, bei der die Datenübertragung bzw. der Datenaustausch über das Serversoftwaremodul (10) sowohl zyklisch als auch ereignisgesteuert ausgestaltet ist.

## Claims

1. PC arrangement for visualization, diagnosis and expert systems for monitoring and controlling or regulating units (1), having a server PC (2), which is linked by means of a first network (5) to the units (1), and client PCs (4), which form a second network (9) with the server PC (2) and which are connected to the first network (5) for the purpose of the data transmission or the data exchange with the units (1) via the server PC (2),
the software structure for the PC arrangement (2, 4) wherein broken down into autonomous software modules (10, 12, 13, 14, 15), which in each case realize at least one functionality and one of which is in the form of an autonomous server software module (10), which realizes the data transmission or the data exchange with the units (1), and is implemented on the server PC (2) connected to the units (1) via the first network (5), **characterized in that** the units (1) are high-voltage supply units (1) for electrostatic filters, **in that** it is possible for the further software modules (12, 13, 14, 15) to be implemented on each client PC (4) or the server PC (2), and **in that** the server software module (10) is designed such that it can be used to categorize a large number of data from controllers of the high-voltage supply units (1) differently, it being possible to cyclically update imaging of measured and status data from the controllers in the server software module (10), whereas other data, for example parameter data, oscilloscope data, characteristic data and the like, can be transmitted at the request of one of the client PCs (4).

2. PC arrangement according to Claim 1, in which the first network (5), which connects the server PC (2) to the high-voltage supply units (1), is in the form of a Profibus network.

3. PC arrangement according to Claim 1, in which the first network (5), which connects the server PC (2) to the high-voltage supply units (1), is in the form of an Ethernet network using TCP/IP.

4. PC arrangement according to one of Claims 1 to 3, in which the second network (9), which connects the server PC (2) to the client PCs (4), is in the form of a standard network, for example in the form of an Ethernet network using TCP/IP protocol.

5. PC arrangement according to one of Claims 1 to 4, in which the server software module (10) implemented on the server PC (2) is in the form of a DCOM server or a WinSocket server.

6. PC arrangement according to one of Claims 1 to 5, in which in each case one group of high-voltage supply units (1) has an associated bus coupler (6).

7. PC arrangement according to Claim 6, in which the server software module (10) is designed such that it can be used to categorize a large number of data from controllers of the high-voltage supply units (1) differently, it being possible to cyclically update imaging of measured and status data from the controllers in the server software module (10), whereas other data, for example parameter data, oscilloscope data, characteristic data and the like, can be transmitted at the request of one of the client PCs (4).

8. PC arrangement according to Claim 6 or 7, in which a connection between the server PC (2) which implements the server software module (10) and the controllers can be started automatically when data from the controllers is requested at one or more client PCs (4).

9. PC arrangement according to one of Claims 1 to 8, in which the functionality "measured data archiving" is realized by an autonomous measured data software module (12).

10. PC arrangement according to Claim 9, in which the measured data software module (12) is in the form of a databank or data system in which measured and status data can be archived for a predeterminable period of time.

11. PC arrangement according to one of Claims 1 to 10, in which the functionalities "visualization, parameter setting, device control" are realized by an autonomous display software module (13).

12. PC arrangement according to Claim 11, in which, by means of the display software module (13), it is possible to access data stored in the measured data software module (12), to access measured and status data updated in the server software module (10) and, by means of the server software module (10), to directly access further data available in the controllers.

13. PC arrangement according to Claim 11 or 12, in which the display software module (13) can be implemented on two or more client PCs (4) and the server PC (2) simultaneously.

14. PC arrangement according to one of Claims 11 to 13, in which the display software module (13) can be realized on different user planes, for example on an operator plane and an expert plane.

15. PC arrangement according to one of Claims 1 to 14, in which the functionality "control of auxiliary drives" is realized by an autonomous control software module (14).

16. PC arrangement according to Claim 15, in which components of the electrostatic filter can be matched automatically to different operating conditions of the electrostatic filter by means of the control software module (14).

17. PC arrangement according to one of Claims 1 to 16, in which the functionality "optimization" is realized by an autonomous optimization software module (15).

18. PC arrangement according to Claim 17, in which, by means of the optimization software module (15), the operation of the electrostatic filter can be optimized using as a basis the efficiency of the electrostatic filter and/or the energy consumption of the electrostatic filter.

19. PC arrangement according to Claim 17 or 18, in which the server software module (10) implemented in the server PC (2) can be accessed by means of the measured data software module (12), the display software module (13), the optimization software module (15) and the control software module (14).

20. PC arrangement according to one of Claims 1 to 19, in which the data transmission or the data exchange via the server software module (10) may be both cyclic and event-controlled.

## Revendications

1. Agencement PC de systèmes de visualisation de diagnostic et expert pour le contrôle et la commande ou la régulation d'unités ( 1 ), comprenant un PC serveur ( 2 ), qui est en réseau avec les unités ( 1 ) au moyen d'un premier réseau ( 5 ), et des PC clients ( 4 ), qui forment un deuxième réseau ( 9 ) avec le PC serveur ( 2 ) et qui, pour la transmission de données ou pour l'échange de données avec les unités ( 1 ), sont reliés au premier réseau ( 5 ) par l'intermédiaire du PC serveur ( 2 ), dans lequel la structure logicielle de l'agencement PC ( 2, 4 ) est décomposée en des modules ( 10, 12, 13, 14, 15 ) logiciels autonomes, réalisant respectivement au moins une fonctionnalité, dont l'un est constitué sous la forme d'un module ( 10 ) logiciel serveur autonome réalisant la transmission de données ou l'échange de données avec les unités ( 1 ) et est réalisé sur le PC serveur ( 2 ) relié aux unités ( 1 ) par l'intermédiaire du premier réseau ( 5 ), **caractérisé en ce que** les unités ( 1 ) sont des unités ( 1 ) d'alimentation en haute tension de filtres électriques, **en ce que** les autres modules ( 12, 13, 14, 15 ) logiciels peuvent être réalisés sur chaque PC client ( 4 ) ou sur le PC serveur ( 2 ) et **en ce que** le module ( 10 ) logiciel de serveur est constitué de manière à pouvoir grâce à lui catégoriser différemment une pluralité de données de contrôleurs des unités ( 1 ) d'alimentation en haute tension, une reproduction de données de mesure et d'état des contrôleurs pouvant être mise à jour cycliquement dans le module ( 10 ) de logiciel serveur, tandis que d'autres données, par exemple des données de paramètre, des données d'oscilloscope, des données de courbes caractéristiques et analogues, peuvent être transmises sur demande par l'un des PC clients ( 4 ).

2. Agencement PC suivant la revendication 1, dans lequel le PC serveur ( 2 ) est constitué, avec le premier réseau ( 5 ) reliant les unités ( 1 ) d'alimentation en haute tension, sous la forme d'un réseau profibus.

3. Agencement PC suivant la revendication 1, dans lequel le premier réseau ( 5 ) reliant le PC serveur ( 2 ) aux unités ( 1 ) d'alimentation en haute tension est réalisé sous la forme d'un réseau Ethernet avec TCP/IP.

4. Agencement PC suivant l'une des revendications 1 à 3, dans lequel le deuxième réseau ( 9 ) reliant le PC serveur ( 2 ) au PC client ( 4 ) est réalisé sous la forme d'un réseau normalisé, par exemple sous la forme du réseau Ethernet avec protocole TCP/IP.

5. Agencement PC suivant l'une des revendications 1 à 4, dans lequel le module ( 10 ) logiciel serveur, réalisé sur le serveur PC ( 2 ), est constitué sous la forme d'un serveur DCOM ou d'un serveur Winsocket.

6. Agencement PC suivant l'une des revendications 1 à 5, dans lequel un coupleur ( 6 ) de bus est associé respectivement à un groupe d'unités ( 1 ) d'alimentation en haute tension.

7. Agencement PC suivant la revendication 6, dans lequel le module ( 10 ) logiciel serveur est constitué de manière à pouvoir par lui, catégoriser différemment une pluralité de données de contrôleurs des unités ( 1 ) d'alimentation de haute tension, une reproduction de données de mesure et d'état des contrôleurs pouvant être mise à jour cycliquement dans le module ( 10 ) logiciel serveur, tandis que d'autres données, par exemple des données de paramètre, des données d'oscilloscope, des données de courbes caractéristiques et analogues, peuvent être transmises sur demande par l'un des clients PC ( 4 ).

8. Agencement PC suivant la revendication 6 ou 7, dans lequel une liaison entre le serveur PC ( 2 ) réalisant le module ( 10 ) logiciel serveur et les contrôleurs peut débuter automatiquement, lorsque des données sur un ou sur plusieurs clients PC ( 4 ) sont demandées par les contrôleurs.

9. Agencement PC suivant l'une des revendications 1 à 8, dans lequel une fonctionnalité « archivage de données de mesure » est réalisée par un module ( 12 ) logiciel de données de mesure autonome.

10. Agencement PC suivant la revendication 9, dans lequel le module ( 12 ) logiciel de données de mesure est constitué sous la forme d'une base de données ou d'un système de fichiers, dans lequel des données de mesure et d'état peuvent être archivées pendant un laps de temps pouvant être donné à l'avance.

11. Agencement PC suivant l'une des revendications 1 à 10, dans lequel les fonctionnalités « visualisation, réglage de paramètres, services d'appareil » sont réalisées par un module ( 13 ) logiciel d'affichage autonome.

12. Agencement PC suivant la revendication 11, dans lequel il peut être accédé, au moyen du module ( 13 ) logiciel d'affichage, à des données mémorisées dans le module ( 12 ) logiciel de données de mesure, aux données de mesure et d'état mises à jour dans le module ( 10 ) logiciel serveur et, par le module ( 10 ) logiciel serveur, directement à d'autres données disponibles dans les contrôleurs.

13. Agencement PC suivant la revendication 11 ou 12, dans lequel le module ( 13 ) logiciel d'affichage, est réalisé, simultanément, sur plusieurs clients PC ( 4 ) et le serveur ( 2 ).

14. Agencement PC suivant l'une des revendications 11 à 13, dans lequel le module ( 13 ) logiciel d'affichage peut être réalisé dans des plans utilisateurs différents, par exemple dans un plan opérateur et dans un plan expert.

15. Agencement PC suivant l'une des revendications 1 à 14, dans lequel une fonctionnalité « entraînement auxiliaire de commande » est réalisée par un module ( 14 ) logiciel de commande autonome.

16. Agencement PC suivant la revendication 15, dans lequel des parties constitutives de l'électrofiltre peuvent, au moyen du module ( 14 ) logiciel de commande, être adaptées automatiquement à des conditions de fonctionnement différentes de l'électrofiltre.

17. Agencement PC suivant l'une des revendications 1 à 16, dans lequel une fonctionnalité « optimisation » est réalisée par un module ( 15 ) logiciel d'optimisation autonome.

18. Agencement PC suivant la revendication 17, dans lequel, au moyen du module ( 15 ) logiciel d'optimisation, le fonctionnement d'électrofiltre peut être optimisé sur la base de l'efficacité de l'électrofiltre et/ou de la consommation d'énergie de l'électrofiltre.

19. Agencement PC suivant la revendication 17 ou 18, dans lequel il peut être accédé au module ( 10 ) logiciel serveur réalisé dans le serveur PC ( 2 ), au moyen du module ( 12 ) logiciel de données de mesure, du module ( 13 ) logiciel d'affichage, du module ( 15 ) logiciel d'optimisation et du module ( 14 ) logiciel de commande.

20. Agencement PC suivant l'une des revendications 1 à 19, dans lequel la transmission de données ou l'échange de données est conformé(e) par le module ( 10 ) logiciel serveur, tant cycliquement qu'également en étant commandé par un événement.
